# EUROPEAN PATENT SPECIFICATION

(11) **EP 2 667 672 B1**
(45) Date of publication and mention of the grant of the patent: **17.06.2015**
(21) Application number: 13181430.3
(22) Date of filing: 31.07.2009
(51) Int. Cl.: H04W 60/06, H04W 76/06, H04W 84/04

(54) **Deregistration method, home nodeb (HNB) and home nodeb gateway (HNB GW)**
Deregistrierungsverfahren, Heimknoten (HNB) und Heimknotengateway (HNB GW)
Procédé de désenregistrement, noeud local (HNB) et passerelle de noeud local (HNB GW)

(30) Priority: 26.09.2008 CN 200810216523
(43) Date of publication of application: 27.11.2013
(62) Divisional of application: 09817193.7
(73) Proprietor: Huawei Technologies Co., Ltd., Shenzhen, Guangdong 518129 (CN)
(72) Inventor: Zhou, Zheng, Shenzhen, Guangdong (CN)
(74) Representative: Kreuz, Georg Maria

(56) References cited:
- WO-A1-2008/100074
- KR-A- 20030 013 645
- ALCATEL-LUCENT ET AL: "UE Registration & Signalling Connection Establishment", 3GPP DRAFT; R3-081789, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050164878, [retrieved on 2008-08-13]

## Description

### FIELD OF THE INVENTION

The present invention relates to the field of communication technology, and more particularly, to a de-registration method, a Home NodeB gateway (HNB GW), and a Home NodeB (HNB).

### BACKGROUND OF THE INVENTION

With the rapid development of Internet services and the extensive application of broadband access networks and wireless networks, high-speed and easily accessed networks are drawing wide attention. Users need high-speed, convenient, and low-cost hand-held wireless equipments to enjoy wireless data services. Meanwhile, with the ever increasing of users of 3^{rd} Generation (3G) and ever deepening study on Long Term Evolution (LTE), as a typical representative of private NodeBs, an HNB or an Access Point (AP) is drawing more and more interests. The HNB refers to a miniaturized NodeB for Home or office, and it may be completely private, or can also be open to public with different priorities or authorities that are set. It is privately owned but not owned by the government or operators, and its target uses may be a small range of users, or may be a wide range of users.

In existing technical solutions, when user equipment (UE) accesses to the HNB and is authorized by the HNB, the HNB needs to send a registration message of the UE to an HNB GW, and the HNB GW will assign and reserve corresponding Iuh Interface resources for the UE, which are known as pre-registration resources, such as UE Context ID (which identifies a signaling connection of the UE on the Iuh interface). The corresponding Iuh interface resources remain valid until the HNB finds that the UE moves out of the coverage of the HNB . After that, the HNB releases the assigned pre-registration resource for the UE, and sends a de-register message of the UE to notify the HNB GW that the HNB GW shall release the assigned pre-registration resources for the UE.

However, the existing UE de-registration procedure is initiated only by the HNB, and if the HNB does not receive any information of the UE within a Location Area Update (LAU) period, the HNB determines that the UE has moved out of the coverage of the HNB, and needs to send a de-register request message and clear pre-registration resources.

If the LAU period is set relatively long, the HNB generally cannot detect the movement of the UE at the first time when the UE in an idle or Cell_PCH state moves to another cell, and therefore will not initiate the de-registration procedure in time. Therefore, within a very long LAU period, the pre-registration resources including the UE Context ID on the HNB and the HNB GW are reserved even though the UE has moved to another cell, resulting in waste of resources.

If the LAU period is set relatively short, a UE falling within the HNB will frequently send LAU messages to the HNB, causing waste of resources, reducing frequency utilization efficiency, and increasing the power consumption of the UE.

Patent publication WO-A-2008100074 discloses a method for detachment of a mobile set within the equivalent route area moving between communication systems, comprising steps of: during the detachment process is implemented between a mobile set and a service node in one communication system, the service node generates one or more messages and transmits it to the service nodes in one or more communication system within the ERA. If the message is transmitted to the service node within the ERA of only one communication system, this service node transmits this message or the message generated according to this message to the service nodes within the ERA of the other communication system.

Patent publication KR-A-20030013645 discloses a method for updating information of MSC or SGSN in GMLC, wherein a subscriber transmits a location registration request message to an MSC2 or SGSN2 through an MS of a subscriber for performing a location registration; the MSC2 or SGSN2 receives the location registration request message from the MS, transmits information such as an ESN and an MIN of the MS and its ID to an HLR and requests the location registration update; the HLR performs the location registration of the subscriber, transmits a location registration cancellation message to an MSC1 or SGSN1; if the HLR transmits a response message about the request of the location registration to the MSC2 or SGSN2, the MSC2 or SGSN2 stores subscriber information in a DB and performs the location registration about the subscriber who is moved to a service area B of a local station; the HLR transmits subscriber information and information of the MSC2 or SGSN2 in which the location of the subscriber is currently registered to a GMLC and notifies that the location registration of the subscriber is updated; the GMLC receives subscriber information and information of the MSC2 or SGSN2 and updates information of an MSC or SGSN corresponding to the subscriber stored in its DB; and the GMLC transmits a response message including a GMLC's number to the HLR.

Document "UE Registration & Signaling Connection Establishment", 3GPP TSG-RAN R3-081789, discloses an issue about the UE registration and signaling connection establishment, wherein a UE sends a Initial Direct Transfer message to an HNB containing a NAS message to establish UE registration and signaling connection; when the connection it to be released, a CN sends a RANAP Release Iu connection command message to the HNB-GW, the HNB-GW forwards this message to the relevant HNB, and the HNB triggers the release of the RRC connection to the UE.

Other available prior art documents are document "Context-Id management during UE Registration", 3GPP TSG-RAN R3-082571 and document "UTRAN luh Interface HNBAP signalling" 3GPP TS 25.4xx V0.0.0.

### SUMMARY OF THE INVENTION

The primary technical problem to be solved by the present invention is to provide a de-registration method, a Home NodeB (HNB) and a Home NodeB gateway (HNB GW), in order to release pre-registration resources assigned for a UE in time.

The invention is defined in the claims.

To solve the above technical problem, according to the first aspect of the present invention a de-registration method includes the following steps:
receiving, by a Home NodeB gateway, HNB GW, a register request initiated to the HNB GW by a user equipment (UE), wherein the register request is sent after the UE moves to another cell from a Home NodeB, HNB;
detecting, by the HNB GW, whether the HNB GW itself has pre-registration resources corresponding to the UE, and
if the HNB GW itself has the pre-registration resources corresponding to the UE, notifying that the HNB shall release pre-registration resources corresponding to the UE by sending a de-register request to the HNB, wherein the pre-registration resources comprises: Context ID.

According to the second aspect of the present invention a Home NodeB gateway (HNB GW) includes a transceiving unit and a release initiating unit.

The transceiving unit is configured to receive a register request initiated to the HNB GW by a user equipment (UE), wherein the register request is sent after the UE moves to another cell from a Home NodeB, HNB.

The release initiating unit is configured to: when the transceiving unit receives the register request and the pre-registration resources corresponding to the UE exist in the HNB GW, notify the HNB that the HNB shall release pre-registration resources corresponding to the UE by sending a de-register request to the HNB through the transceiving unit, wherein the pre-registration resources comprises: Context ID.

It can be seen from the above that the HNB GW initiates release of pre-registration resources corresponding to a UE through the received indication information indicating that the UE has moved to another cell, thereby enabling the HNB GW and the HNB to know as fast as possible that the UE has moved out of the coverage of the HNB cell and release the pre-registration resources assigned for the UE in time, therefore reducing waste of resources.

### BRIEF DESCRIPTION OF THE DRAWINGS

FIG. 1 is a flow chart of a de-registration method according to an embodiment of the present invention;
FIG. 2 is a flow chart of another de-registration method according to an embodiment of the present invention;
FIG. 3 is a structural diagram of an HNB GW according to an embodiment of the present invention; and
FIG. 4 is a structural diagram of an HNB according to an embodiment of the present invention.

### DETAILED DESCRIPTION OF THE EMBODIMENTS

For better understanding the purposes, technical solutions, and advantages of the present invention, the technical solutions provided in the embodiments of the present invention are illustrated in detail below with reference to the accompanying drawings.

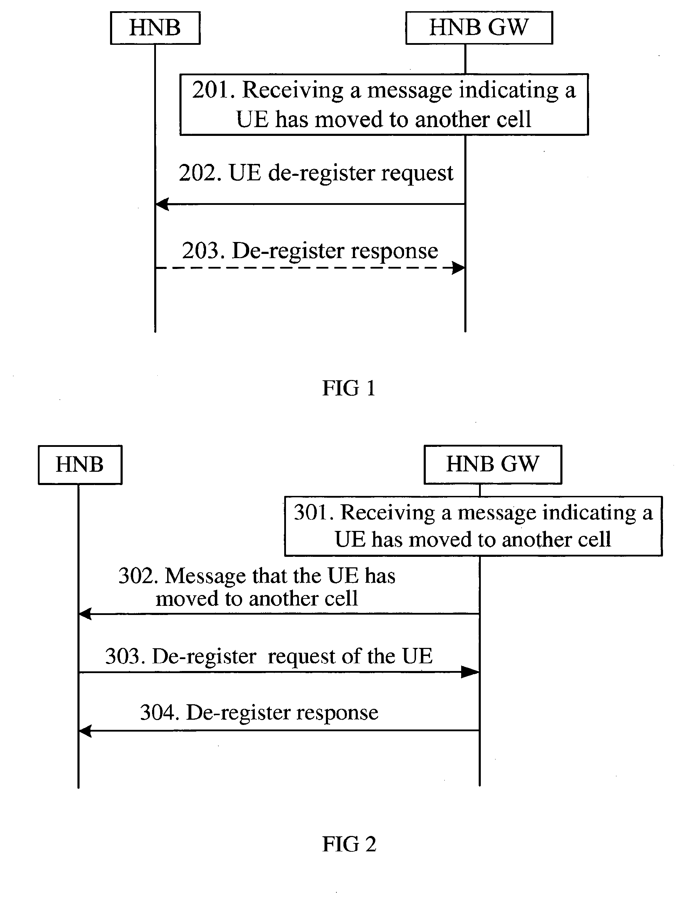

A de-registration method is provided in a first embodiment of the present invention. Referring to FIG. 1, the method includes the following steps:
Step 201: An HNB GW acquires a message indicating that a UE has moved to another cell.

The HNB GW can learn that the UE has moved to another cell by using the following methods.
Method 1: The UE, in another cell, initiates a register request to the HNB GW, and at this time, the HNB GW can know that the UE has moved out of the coverage of the HNB;
Method 2: When the HNB GW has a corresponding interface with a Radio Network Controller (RNC) of a neighboring macro network or a neighboring HNB GW, and when the UE registers with a cell controlled by the RNC of the neighboring macro network or the HNB GW, the RNC of the neighboring macro network or the neighboring HNB GW can analyze that the UE at one time camps on an HNB in the HNB GW by parsing signaling, and notify the HNB GW that the UE has moved to another cell through a message (such as a Cell update message).
Method 3: The UE will initiate an LAU procedure when the UE moves out of the coverage of the HNB, and notifies a core network of updating information about a location area where the UE locates through the LAU process so that the core network can know that the UE has moved out of original cell of the UE, and can find corresponding HNB GW according to a location area code of the original cell reported by the UE and send a notification message to the HNB GW to notify the HNB GW that the UE has moved out of the coverage of the HNB.

Step 202: The HNB GW detects whether pre-registration resources assigned by the HNB GW for the UE exist, and if the pre-registration resources exist, releases the pre-registration resources, and sends a UE de-register request to the HNB immediately to notify the HNB that the UE has moved to another cell and releases the pre-registration resources assigned by the HNB for the UE.

Step 203: Optionally, if, in step 202, the HNB detects that no pre-registration resources exist, the HNB sends a de-register response message to the HNB GW to notify the HNB GW that the pre-registration resources have been released.

A second embodiment is similar to this embodiment, with the exception of the time of initiating the de-registration procedure.

Specifically, the HNB GW sends a UE de-register request to the HNB after a preset period of time when the HNB GW acquires the message indicating that the UE has moved to another cell, to notify the HNB that the UE has moved to another cell and release the pre-registration resources assigned for the UE.

To prevent the UE from switching back to the HNB cell again and initiating a register request of the UE from the HNB cell in a short time, that is, reconstructing registration information after releasing the registration resources in a short time, the second embodiment of the present invention sets that the HNB GW sends the de-register request to a corresponding HNB only if the HNB GW does not receive a message sent by the UE from the HNB for a period of time.

In the first and second embodiments, the HNB GW detects whether the HNB GW itself has pre-registration resources after receiving indication information indicating that the UE moves to another cell, and if the HNB GW itself has the pre-registration resources, releases the pre-registration resources and sends a de-register request message to the HNB immediately or after a preset period of time. If the HNB does not detect any pre-registration resources, the HNB sends a de-register response message to the HNB GW.

FIG. 2 is another de-registration method provided in an embodiment of the present invention. As shown in FIG. 2, the method includes the following steps.

Step 301: An HNB GW receives a message indicating that a UE has moved to another cell.

Step 302: The HNB GW sends information indicating that the UE has moved to another cell to an HNB.

Step 303: The HNB releases pre-registration resources assigned by the HNB for the UE if the HNB detects the pre-registration resources, and immediately sends a de-register request message to the HNB GW. However, to prevent the UE from switching back to the HNB GW cell again and initiating a register request of the UE from the HNB GW cell in a short time, i.e., reconstructing registration information after releasing the registration resources in a short time, the HNB can also send the de-register request message to the HNB GW after a period of time.

Step 304: If the HNB GW does not detect pre-registration resources assigned by the HNB for the UE at the HNB GW, the HNB GW sends a de-register response message to the HNB to notify the HNB that the pre-registration resources on the HNB GW have been released.

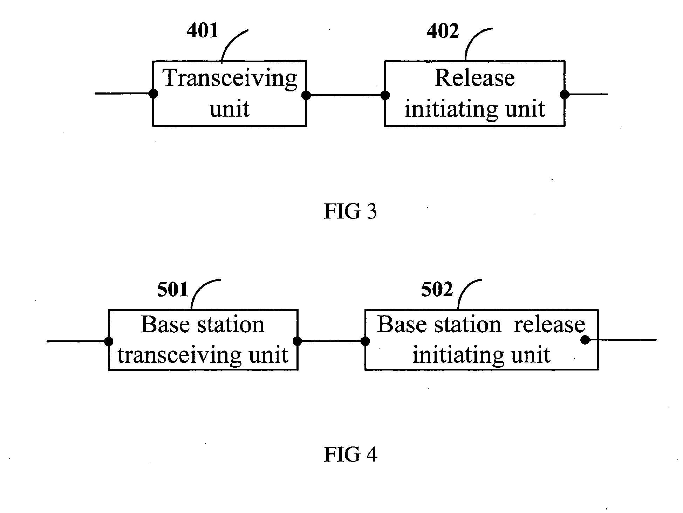

FIG. 3 describes a schematic diagram of an HNB GW according to an embodiment of the present invention, which includes a transceiving unit 401 and a release initiating unit 402.

The transceiving unit 401 is configured to receive indication information that indicates a UE moves to another cell from a source HNB and is sent by the HNB GW, which includes receiving a register request initiated to the HNB GW by the UE in another cell, a Cell Update message of the UE sent by an RNC of a neighboring macro network or a neighboring HNB GW, and a message indicating that the UE moves into a macro network sent by a core network.

The transceiving unit may be further configured to receive a de-register response message sent by the HNB. After the HNB GW sends the de-register request message to the HNB, if the HNB does not detect the pre-registration resources of the UE, the HNB sends the de- register response message to the HNB GW to notify the HNB GW that the pre-registration resources assigned by the HNB have been released.

The transceiving unit is further configured to forward the indication information to the HNB, and receive a de-register request message sent by the HNB after receiving the indication information.

The release initiating unit 402 is configured to initiate release of the pre-registration resources corresponding to the UE after the transceiving unit receives the indication information.

When the transceiving unit receives the indication information and pre-registration resources corresponding to the UE exist in the HNB GW, the pre-registration resources in the HNB GW are released, and the HNB is notified of releasing the pre-registration resources corresponding to the UE by sending the de-register request message to the HNB immediately or after a preset period of time through the transceiving unit.

The release initiating unit is further configured to release the pre-registration resources corresponding to the UE in the HNB GW after the transceiving unit receives the de-register request message.

It can be seen from the above that the HNB GW determines whether the UE moves to another cell before sending the de-register request to the HNB and releases the reserved Iuh resources, thereby reducing waste of resources.

FIG. 4 describes a schematic structural diagram of an HNB according to an embodiment of the present invention, which includes a base station transceiving unit 501 and a base station release initiating unit 502.

The base station transceiving unit 501 is configured to receive indication information which indicates that a UE moves to another cell from a source HNB and is forwarded by an HNB GW to the HNB. It includes receiving a register request initiated to the HNB GW by the UE in another cell, a Cell Update message of the UE sent by an RNC of a neighboring macro network or a neighboring HNB GW, and a message indicating that the UE moves into a macro network sent by a core network.

The Base station transceiving unit may further be configured to receive a de-register response message sent by the HNB GW to the HNB. After the HNB sends the de-register request message to the HNB GW, if the HNB GW itself does not detect pre-registration resources, the HNB GW sends the de-register response message to the HNB to notify the HNB that the pre-registration resources have been released.

The Base station transceiving unit is configured to receive a de-register request message sent by the HNB GW after receiving the indication information.

After the transceiving unit receives the indication information, the Base station release initiating unit 502 is configured to initiate release of the pre-registration resources corresponding to the UE.

After the Base station transceiving unit receives the indication information and pre-registration resources corresponding to the UE exist in the HNB, the pre-registration resources in the HNB are released, and the HNB GW is notified of releasing the pre-registration resources corresponding to the UE by sending the de-register request message to the HNB GW immediately or after a preset period of time through the transceiving unit.

After the Base station transceiving unit receives the de-register request message, the Base station release initiating unit is configured to release the pre-registration resources corresponding to the UE in the HNB.

It can be seen from the above embodiments that the HNB GW receives indication information indicating that a UE moves to another cell and initiates release of the pre-registration resources corresponding to the UE, thereby enabling the HNB GW to acquire the message indicating that the UE has moved out of the coverage of the HNB cell and release the pre-registration resources assigned for the UE in time, reducing waste of resources.

It will be clearly understood by those skilled in the art through the above description of various embodiments that, the present invention can be implemented by means of software and a necessary general hardware platform, or, of course, by means of hardware, but the former is preferred in many cases. Based on such understanding, the technical solutions of the present invention, or the portions contributing to the prior art can essentially be embodied in form of a software product. The computer software product is stored in one storage medium and includes several instructions to cause a computer device, which may be a personal computer, a server or a network device, to perform the methods described in the embodiments of the present invention.

The present invention has been illustrated and described with reference to some exemplary embodiments of the present invention, but it should be understood by those of ordinary skill in the art that various changes can be made thereto.

Item 1. A de-registration method, including: receiving, by a Home NodeB gateway, HNB GW, indication information indicating that user equipment, UE, has moved to another cell from a source Home NodeB, HNB; and initiating, by the HNB GW, release of pre-registration resources corresponding to the UE.

Item 2. The de-registration method of item 1, wherein the receiving, by the HNB GW, the indication information indicating that the UE has moved to another cell from the source HNB is: receiving, by the HNB GW, a register request initiated to the HNB GW by the UE in another cell; or receiving, by the HNB GW, a Cell Update message of the UE sent by a Radio Network Controller, RNC, of a neighboring macro network or a neighboring HNB GW; or receiving, by the HNB GW, a message indicating that the UE has moved into a macro network sent by a core network.

Item 3. The de-registration method of item 1, wherein the initiating, by the HNB GW, release of pre-registration resources corresponding to the UE comprises: detecting, by the HNB GW, whether the HNB GW itself has pre-registration resources corresponding to the UE, and if the HNB GW itself has the pre-registration resources corresponding to the UE, releasing the pre-registration resources and notifying that the HNB shall release pre-registration resources corresponding to the UE by sending a de-register request to the HNB.

Item 4. The de-registration method of item 3, further comprising: receiving, by the HNB GW, a de-register response message returned by the HNB, wherein the de-register response message is a message returned to the HNB GW by the HNB after the HNB detects no pre-registration resources in itself when receiving the de-register request.

Item 5. The de-registration method of item 1, wherein the initiating, by the HNB GW, release of the pre-registration resources corresponding to the UE comprises: forwarding, by the HNB GW, to the HNB the indication information indicating that the UE has moved to another cell from the source HNB; and releasing, by the HNB GW, pre-registration resources corresponding to the UE in the HNB GW according to a de-register request sent by the HNB after the HNB receives the indication information.

Item 6. The de-registration method of item 5, further comprising: detecting, by the HNB, whether the HNB itself has pre-registration resources corresponding to the UE after receiving the indication information forwarded by the HNB GW; and if the HNB itself has the pre-registration resources corresponding to the UE, releasing the pre-registration resources.

Item 7. The de-registration method of item 5, further comprising: sending, by the HNB GW, a de-register response to the HNB, wherein the de-register response is a message returned to the HNB by the HNB GW after the HNB GW detects itself when receiving the de-register request and does not detect the pre-registration resources.

Item 8. The de-registration method of item 3 or 4, wherein the sending the de-register request message comprises: sending the de-register request immediately; or sending the de-register request after a preset period of time.

Item 9. A Home NodeB gateway, HNB GW, including: a transceiving unit, configured to receive indication information that indicates user equipment, UE, has moved to another cell from a source Home NodeB, HNB; and a release initiating unit, configured to initiate release of pre-registration resources corresponding to the UE after the transceiving unit receives the indication information.

Item 10. The HNB GW of item 9, wherein: the transceiving unit is configured to receive a register request initiated to the HNB GW by the UE in another cell; or the transceiving unit is configured to receive a Cell Update message of the UE sent by a Radio Network Controller, RNC, of a neighboring macro network or a neighboring HNB GW; or the transceiving unit is configured to receive a message indicating that the UE has moved into a macro network sent by a core network.

Item 11. The HNB GW of item 9, wherein: the release initiating unit is configured to: when the transceiving unit receives the indication information and the pre-registration resources corresponding to the UE exist in the HNB GW, release the pre-registration resources in the HNB GW, and notify the HNB that the HNB shall release pre-registration resources corresponding to the UE by sending a de-register request to the HNB through the transceiving unit.

Item 12. The HNB GW of item 9, wherein: the transceiving unit is further configured to forward the indication information to the HNB, and receive a de-register request sent by the HNB after the HNB receives the indication information; and the release initiating unit is further configured to release pre-registration resources corresponding to the UE in the HNB GW after the transceiving unit receives the de-register request.

Item 13. A Home NodeB, HNB, including: a base station transceiving unit, configured to receive information that indicates user equipment, UE, has moved to another cell from a source HNB and is sent by a Home NodeB gateway, HNB GW, to the HNB; and a base station release initiating unit, configured to initiate release of pre-registration resources corresponding to the UE after the transceiving unit receives the information.

Item 14. The HNB of item 13, wherein: the base station transceiving unit is configured to receive a register request initiated to the HNB GW by the UE in another cell and forwarded by the HNB GW; or the base station transceiving unit is configured to receive a Cell Update message of the UE sent to the HNB GW by a Radio Network Controller, RNC, of a neighboring macro network of the HNB GW or a neighboring HNB GW and forwarded by the HNB GW; or the base station transceiving unit is configured to receive a message indicating that the UE has moved into a macro network that is sent to the HNB GW by a core network forwarded by the HNB GW.

Item 15. The HNB of item 14, wherein: the base station release initiating unit is configured to: when the base station transceiving unit receives the information and pre-registration resources corresponding to the UE exist in the HNB, release the pre-registration resources in the HNB, and notify the HNB GW that the HNB GW shall release pre-registration resources corresponding to the UE by sending a de-register request to the HNB GW through the transceiving unit.

Item 16. The HNB of item 13, comprising: the base station transceiving unit is configured to receive a de-register request sent by the HNB GW, wherein the de-register request is sent by the HNB GW after the HNB GW receives indication information indicating that the UE has moved to another cell from the source HNB; and the base station release initiating unit is configured to release the pre-registration resources corresponding to the UE in the HNB after the transceiving unit receives the de-register request.

## Claims

1. A de-registration method, comprising the steps of:
receiving (201, 301), by a Home NodeB gateway, HNB GW, a register request initiated to the HNB GW by a user equipment, UE, wherein the register request is sent after the UE moves to another cell from a Home NodeB, HNB;
detecting (202), by the HNB GW, whether the HNB GW itself has pre-registration resources corresponding to the UE, and
if the HNB GW itself has the pre-registration resources corresponding to the UE, notifying that the HNB shall release pre-registration resources corresponding to the UE by sending a de-register request to the HNB, wherein the pre-registration resources comprise the UE Context ID.

2. The de-registration method of claim 1, further comprising:
if the HNB GW itself has the pre-registration resources corresponding to the UE, releasing, by the HNB GW, the pre-registration resources.

3. The de-registration method of claim 1 or 2, further comprising:
receiving (203), by the HNB GW, a de-register response message returned by the HNB, wherein the de-register response message is a message returned to the HNB GW by the HNB after the HNB detects no pre-registration resources corresponding to the UE in itself when receiving the de-register request.

4. The de-registration method of any one of the claims 1-3, wherein the sending the de-register request message to the HNB comprises:
sending, by the HNB GW, the de-register request to the HNB immediately; or
sending, by the HNB GW, the de-register request to the HNB after a preset period of time.

5. A Home NodeB gateway, HNB GW, comprising:
a transceiving unit (401), configured to receive a register request initiated to the HNB GW by a user equipment, UE, wherein the register request is sent after the UE moves to another cell from a Home NodeB, HNB; and
a release initiating unit (402), configured to: when the transceiving unit receives the register request and the pre-registration resources corresponding to the UE exist in the HNB GW, notify the HNB that the HNB shall release pre-registration resources corresponding to the UE by sending a de-register request to the HNB through the transceiving unit, wherein the pre-registration resources comprise the UE Context ID.

6. The HNB GW of claim 5, wherein:
the release initiating unit (402) is further configured to: when the transceiving unit receives the register request and the pre-registration resources corresponding to the UE exist in the HNB GW, release the pre-registration resources in the HNB GW.

7. The HNB GW of claim 5 or 6, wherein:
the transceiving unit (401) is further configured to receive a de-register response message returned by the HNB, wherein the de-register response message is a message returned to the HNB GW by the HNB after the HNB detects no pre-registration resources corresponding to the UE in itself when receiving the de-register request.

8. The HNB GW of any one of the claims 5-7, wherein:
the release initiating unit (402) is configured to: notify the HNB that the HNB shall release pre-registration resources corresponding to the UE by sending the de-register request to the HNB immediately or after a preset period of time through the transceiving unit.

## Patentansprüche

1. Ausbuchungsverfahren, das die folgenden Schritte umfasst:
Empfangen (201, 301) durch ein Heimat-NodeB-Gateway, HNB-GW, einer Eintragungsanforderung, die durch ein Anwendergerät (user equipment, UE) für das HNB-GW initiiert wird, wobei die Eintragungsanforderung gesendet wird, nachdem sich das UE von einem Heimat-NodeB, HNB, zu einer anderen Zelle bewegt;
Detektieren (202) durch das HNB-GW, ob das HNB-GW selbst Voreintragungsbetriebsmittel, die dem UE entsprechen, aufweist, und
falls das HNB-GW selbst die Voreintragungsbetriebsmittel aufweist, die dem UE entsprechen, Melden, dass der HNB die Voreintragungsbetriebsmittel, die dem UE entsprechen, freigeben soll, durch Senden einer Ausbuchungsanforderung zu dem HNB, wobei die Voreintragungsbetriebsmittel die UE-Kontext-ID umfassen.

2. Ausbuchungsverfahren nach Anspruch 1, das ferner Folgendes umfasst:
falls das HNB-GW selbst die Voreintragungsbetriebsmittel, die dem UE entsprechen, aufweist, Freigeben der Voreintragungsbetriebsmittel durch das HNB-GW.

3. Ausbuchungsverfahren nach Anspruch 1 oder 2, das ferner Folgendes umfasst:
Empfangen (203) durch das HNB-GW einer Ausbuchungsantwortnachricht, die durch den HNB zurückgegeben wird, wobei die Ausbuchungsantwortnachricht eine Nachricht ist, die durch den HNB zu dem HNB-GW zurückgegeben wird, nachdem der HNB keine Voreintragungsbetriebsmittel, die dem UE entsprechen, in sich selbst detektiert, wenn er die Ausbuchungsanforderung empfängt.

4. Ausbuchungsverfahren nach einem der Ansprüche 1-3, wobei das Senden der Ausbuchungsanforderung zu dem HNB Folgendes umfasst:
Senden der Ausbuchungsanforderung durch das HNB-GW zu dem HNB sofort; oder
Senden der Ausbuchungsanforderung durch das HNB-GW zu dem HNB nach einer voreingestellten Zeitspanne.

5. Heimat-NodeB-Gateway, HNB-GW, das Folgendes umfasst:
eine Sender/Empfängereinheit (401), die konfiguriert ist, eine Eintragungsanforderung, die durch ein Anwendergerät, UE, für das HNB-GW initiiert wird, zu empfangen, wobei die Eintragungsanforderung gesendet wird, nachdem sich das UE von einem Heimat-NodeB, HNB, zu einer anderen Zelle bewegt; und
eine Freigabeinitiierungseinheit (402), die konfiguriert ist: wenn die Sender/Empfängereinheit die Eintragungsanforderung empfängt und die Voreintragungsbetriebsmittel, die dem UE entsprechen, in dem HNB-GW vorhanden sind, dem HNB zu melden, dass der HNB Voreintragungsbetriebsmittel, die dem UE entsprechen, freigeben soll, durch Senden einer Ausbuchungsanforderung zu dem HNB über die Sender/Empfängereinheit, wobei die Voreintragungsbetriebsmittel die UE-Kontext-ID umfassen.

6. HNB-GW nach Anspruch 5, wobei:
die Freigabeinitiierungseinheit (402) ferner konfiguriert ist: wenn die Sender/Empfängereinheit die Eintragungsanforderung empfängt und die Voreintragungsbetriebsmittel, die dem UE entsprechen, in dem HNB-GW vorhanden sind, die Voreintragungsbetriebsmittel in dem HNB-GW freizugeben.

7. HNB-GW nach Anspruch 5 oder 6, wobei:
die Sender/Empfängereinheit (401) ferner konfiguriert ist, eine Ausbuchungsantwortnachricht, die durch den HNB zurückgegeben wird, zu empfangen, wobei die Ausbuchungsantwortnachricht eine Nachricht ist, die durch den HNB zu dem HNB-GW zurückgegeben wird, nachdem der HNB keine Voreintragungsbetriebsmittel, die dem UE entsprechen, in sich selbst detektiert, wenn er die Ausbuchungsanforderung empfängt.

8. HNB-GW nach einem der Ansprüche 5-7, wobei:
die Freigabeinitiierungseinheit (402) konfiguriert ist: dem HNB zu melden, dass der HNB die Voreintragungsbetriebsmittel, die dem UE entsprechen, freigeben soll, durch Senden der Ausbuchungsanforderung zu dem HNB sofort oder nach einer voreingestellten Zeitspanne über die Sender/Empfängereinheit.

## Revendications

1. Procédé de désenregistrement comprenant les étapes suivantes :
recevoir (201, 301), par une passerelle de noeud B de rattachement, HNB GW, une demande d'enregistrement initiée à la HNB GW par un équipement d'utilisateur, UE, où la demande d'enregistrement est envoyée après que l'UE s'est déplacé vers une autre cellule depuis un noeud B de rattachement, HNB ;
détecter (202), par la HNB GW, si la HNB GW elle-même a des ressources de pré-enregistrement correspondant à l'UE, et
si la HNB GW elle-même a les ressources de pré-enregistrement correspondant à l'UE, notifier que le HNB devra libérer les ressources de pré-enregistrement correspondant à l'UE en envoyant une demande de désenregistrement au HNB, où les ressources de pré-enregistrement comprennent l'identifiant de contexte de l'UE.

2. Procédé de désenregistrement selon la revendication 1, comprenant en outre l'étape suivante :
si la HNB GW elle-même a les ressources de pré-enregistrement correspondant à l'UE, libérer, par la HNB GW, les ressources de pré-enregistrement.

3. Procédé de désenregistrement selon la revendication 1 ou la revendication 2, comprenant en outre l'étape suivante :
recevoir (203), par la HNB GW, un message de réponse de désenregistrement retourné par le HNB, où le message de réponse de désenregistrement est un message retourné à la HNB GW par le HNB après que le HNB n'a détecté en lui-même aucune ressource de pré-enregistrement correspondant à l'UE lors de la réception de la demande de désenregistrement.

4. Procédé de désenregistrement selon l'une quelconque des revendications 1 à 3, dans lequel l'envoi du message de demande de désenregistrement au HNB comprend les étapes suivantes :
envoyer, par la HNB GW, la demande de désenregistrement au HNB immédiatement ; ou
envoyer, par la HNB GW, la demande de désenregistrement au HNB après une période de temps prédéfinie.

5. Passerelle de noeud B de rattachement, HNB GW, comprenant :
une unité d'émission-réception (401), configurée pour recevoir une demande d'enregistrement initiée à la HNB GW par un équipement d'utilisateur, UE, où la demande d'enregistrement est envoyée après que l'UE s'est déplacé vers une autre cellule depuis un noeud B de rattachement, HNB ; et
une unité d'initiation de libération (402), configurée pour : lorsque l'unité d'émission-réception reçoit la demande d'enregistrement et lorsque les ressources de pré-enregistrement correspondant à l'UE existent dans la HNB GW, notifier au HNB que le HNB devra libérer les ressources de pré-enregistrement correspondant à l'UE en envoyant une demande de désenregistrement au HNB par l'intermédiaire de l'unité d'émission-réception, où les ressources de pré-enregistrement comprennent l'identifiant de contexte de l'UE.

6. HNB GW selon la revendication 5, dans laquelle :
l'unité d'initiation de libération (402) est en outre configurée pour : lorsque l'unité d'émission-réception reçoit la demande d'enregistrement et lorsque les ressources de pré-enregistrement correspondant à l'UE existent dans la HNB GW, libérer les ressources de pré-enregistrement dans la HNB GW.

7. HNB GW selon la revendication 5 ou la revendication 6, dans laquelle :
l'unité d'émission-réception (401) est en outre configurée pour recevoir un message de réponse de désenregistrement retourné par le HNB, où le message de réponse de désenregistrement est un message retourné à la HNB GW par le HNB après que le HNB n'a détecté en lui-même aucune ressource de pré-enregistrement correspondant à l'UE lors de la réception de la demande de désenregistrement.

8. HNB GW selon l'une quelconque des revendications 5 à 7, dans laquelle :
l'unité d'initiation de libération (402) est configurée pour : notifier au HNB que le HNB devra libérer les ressources de pré-enregistrement correspondant à l'UE en envoyant la demande de désenregistrement au HNB immédiatement ou après une période de temps prédéfinie par l'intermédiaire de l'unité d'émission-réception.
